# EUROPEAN PATENT APPLICATION

(11) **EP 3 106 543 A1**
(43) Date of publication of application: **21.12.2016**
(21) Application number: 15172513.2
(22) Date of filing: 17.06.2015
(51) Int. Cl.: C25B 11/04, C25B 11/12, C25B 1/10, B01J 21/18, B01J 35/10

(54) **MODIFIED CARBON MATERIAL FOR USE IN WATER ELECTROLYSIS**

(71) Applicant: BASF SE, 67056 Ludwigshafen am Rhein (DE); Max-Planck-Gesellschaft zur Förderung der Wissenschaften e.V., 80539 München (DE)
(72) Inventor: Schwab, Matthias Georg, 68199 Mannheim (DE); Rincon-Ovalles, Rosalba Adriana, 68161 Mannheim (DE); Venkataraman, Shyam Sundar, 67061 Ludwigshafen (DE); Mueller, Andreas, 66287 Quierschied (DE); Peng, Xu Yuan, 232100 Huainan (CN); Bayer, Domnik, 69121 Heidelberg (DE); Muellen, Klaus, 50939 Köln (DE); Sachdev, Hermann, 66123 Saarbrücken (DE)
(74) Representative: Maiwald Patentanwalts GmbH

(57) **Abstract**

The present invention relates to a polymer electrolyte membrane (PEM) water electrolyser, wherein a nitrogen-doped carbon is present in the anode-containing half-cell.

## Description

Hydrogen is a promising clean energy carrier that can be produced by various technologies. At present, hydrogen is mainly produced by steam reforming of natural gas. However, steam reforming of fossil fuels produces low purity hydrogen.

High-quality hydrogen can be produced by water electrolysis. As known to the skilled person, a water electrolyser (i.e. a device in which the water electrolysis is carried out) contains at least one anode-containing half cell where the oxygen evolution reaction (OER) takes place, and at least one cathode-containing half cell where the hydrogen evolution reaction (HER) takes place. If two or more cells are linked together, a stacked configuration is obtained. Accordingly, a water electrolyser having a stacked configuration contains at least two anode-containing half cells and/or at least two cathode-containing half cells.

Different types of water electrolysers are known.

In an alkaline water electrolyser, the electrodes are immersed in a liquid alkaline electrolyte (e.g. an aqueous 20-30% KOH solution). The two electrodes are separated by a diaphragm, which keeps the product gases apart from each other but is permeable to the hydroxide ions and water molecules. The following reaction scheme shows the oxygen evolution reaction which takes place at the surface of the anode in the anode-containing half cell of the alkaline water electrolyser:

4 OH⁻ → O₂ + 2 H₂O + 4 e⁻

In a polymer electrolyte membrane (PEM) water electrolyser (also referred to as a "proton exchange membrane" (PEM) water electrolyser), a solid polymer electrolyte is used which is responsible for proton transport from the anode to the cathode while electrically insulating the electrodes from each other, and for separating the product gases. The following reaction scheme shows the oxygen evolution reaction which takes place at the surface of the anode in the anode-containing half cell of the PEM water electrolyser:

2 H₂O → 4 H⁺ + O₂ + 4 e⁻

Due to its complexity, the oxygen evolution reaction has slow kinetics, which is why a significant overpotential is needed at the anode side for producing oxygen at reasonable rates. Typically, PEM water electrolysers are operated at a voltage of about 1.5 to 2 V (vs. RHE ("reversible hydrogen electrode")).

As the pH is very acidic (PEM: pH of less than 2) and a high overpotential has to be applied, the materials which are present in the anode side of a PEM water electrolyser need to be very corrosion resistant.

Typically, the anode of a water electrolyser comprises a catalyst for the oxygen evolution reaction (an OER electrocatalyst). Appropriate OER electrocatalysts are known to the skilled person and have been described e.g. by M. Carmo et al., "A comprehensive review on PEM water electrolysis", International Journal of Hydrogen Energy, Vol. 38, 2013, pp. 4901-4934; and H. Dau et al., "The Mechanism of Water Oxidation: From Electrolysis via Homogeneous to Biological Catalysis", ChemCatChem, 2010, 2, pp. 724-761.

Bulk catalysts have a limited surface area for electrochemical activity. For increasing the catalytically active surface area, it is generally known to apply a catalyst on a support.

Carbon materials such as carbon black, activated carbon, and graphene are commonly used as a support for different types of catalysts. However, under the operating conditions of the anode side of a PEM water electrolyser (i.e. highly acidic conditions and high overpotential), carbon is subjected to oxidative degradation (also referred to as "carbon corrosion") and is therefore not sufficiently stable for being used in the OER half cell.

Apart from the electrocatalyst and the catalyst support, other components which are typically present in the anode-containing half cell of a PEM water electrolyser, such as a current collector, a gas diffusion layer, or a separator plate also need to show high corrosion resistance.

For alkaline water electrolysers, it is known that a nitrogen-doped carbon may act as an electrocatalyst for the oxygen evolution reaction. Y. Zhao et al., Nat. Commun. 4:2390 doi: 10.1038/ncomms3390 (2013), describe the preparation of a nitrogen-doped carbon by pyrolysis of a melamine/formaldehyde polymer in the presence of nickel nitrate. The nitrogen-doped carbon shows electrocatalytic activity for OER under alkaline conditions (pH 13).

In a PEM fuel cell, the oxygen evolution reaction is reversed and can be illustrated by the following reaction scheme:

4 H⁺ + O₂ + 4 e⁻ → 2 H₂O

This reaction is commonly referred to as the "oxygen reduction reaction" (ORR) and takes place at the cathode of a PEM fuel cell. Appropriate ORR electrocatalysts are commonly known to the skilled person. Typically, in acidic media, electrocatalysts for ORR are different from those which are efficiently catalyzing OER.

At present, PEM fuel cell cathodes are typically operating at temperatures in the range of 60°C - 85°C and potentials in the range of 0.5 - 0.95 V (vs. RHE). However, the kinetics of carbon oxidation under PEM fuel cell operational conditions is relatively slow. Thus, different from PEM water electrolysers, this slow oxidation kinetics makes carbon an appropriate material for PEM fuel cells. Carbon materials can be used as a support for ORR electrocatalysts. However, it is also known that nitrogen-doped carbon itself can be used as the (metal-free) ORR electrocatalyst. J. Shui et al., Sci. Adv. 1, e1400129 (2015) describe the preparation of vertically aligned nitrogen doped carbon nanotubes which can be used as an ORR electrocatalyst in PEM fuel cells. K.S. Nahm et al., Applied Catalysis B: Environmental, 147, 2014, pp. 633-641, describe the preparation of nitrogen-doped carbon electrocatalysts showing improved ORR performance. As mentioned above, carbon is oxidatively degrading much faster under PEM OER conditions if compared to PEM ORR conditions. Accordingly, no conclusions can be drawn from the catalytic properties of carbon under ORR conditions to oxidative stability under OER conditions.

It is an object of the present invention to provide a material which shows sufficient oxidative stability under OER (oxygen evolution reaction) conditions in a PEM water electrolyser and can therefore be used as a component in the anode-containing half cell of a PEM water electrolyser (e.g. as a support for an OER catalyst, a component of the current collector, the gas diffusion layer or the separator plate).

The object is solved by a polymer electrolyte membrane (PEM) water electrolyser, wherein a nitrogen-doped carbon is present in the anode-containing half-cell.

In the present invention, it has surprisingly been realized that nitrogen-doping of a carbon material improves its oxidative stability under the highly corrosive OER conditions applied in the anode side of a PEM water electrolyser.

Like in any water electrolyser, at least one anode-containing half cell where the oxygen evolution reaction takes place, and at least one cathode-containing half cell where the hydrogen evolution reaction takes place, are present in the water electrolyser of the present invention. The nitrogen-doped carbon is present in the anode-containing half-cell. However, the nitrogen-doped carbon may also be present in the cathode-containing half cell.

The anode is the electrode where the oxygen evolution reaction takes place. In addition to the anode, an anode-containing half cell of a water electrolyser typically comprises further parts such as a current collector, a separator plate, and a gas diffusion layer.

The nitrogen-doped carbon can be present in the anode-containing half cell at any location where improved oxidative stability is needed.

The nitrogen-doped carbon can be present in the anode (i.e. the electrode on which surface the oxygen evolution reaction takes place). Preferably, an electrocatalyst for the oxygen evolution reaction (in the following referred to as an "OER electrocatalyst") is supported on the nitrogen-doped carbon. Appropriate OER electrocatalysts are commonly known to the skilled person and are described e.g. by M. Carmo et al., "A comprehensive review on PEM water electrolysis", International Journal of Hydrogen Energy, Vol. 38, 2013, pp. 4901-4934. The OER electrocatalyst can be e.g. a noble metal (e.g. Ir, Ru, or mixtures or alloys thereof), a noble metal oxide (e.g. an iridium oxide, a ruthenium oxide, or a mixed Ir/Ru oxide), or a mixture thereof. The OER electrocatalyst can be applied onto the nitrogen-doped carbon by commonly known methods, such as adsorption from a solution containing a precursor compound (e.g. a noble metal salt), followed by a chemical treatment (e.g. reduction or oxidation).

In a PEM water electrolyser, the electrons travel from the anode (where the carbon-supported OER catalyst is located) through the current collector and the separator plates and then go to the cathode side. Accordingly, the current collector and the separator plate which are present in the anode-containing half-cell of a PEM water electrolyser should also be corrosion-resistant.

In the PEM water electrolyser of the present invention, the current collector of the anode-containing half cell may comprise the nitrogen-doped carbon.

The anode-containing half cell of the PEM water electrolyser may also comprise a separator plate in which the nitrogen-doped carbon is present.

Typically, a PEM water electrolyser comprises a gas diffusion layer. Accordingly, the gas diffusion layer which is present in the anode-containing half-cell of a PEM water electrolyser should also be corrosion-resistant. So, the anode-containing half cell of the PEM water electrolyser may also comprise a gas diffusion layer in which the nitrogen-doped carbon is present.

Further components which are typically present in a PEM water electrolyser are commonly known to the skilled person. As known to the skilled person, a PEM water electrolyser contains a polymeric proton exchange membrane. Appropriate polymer electrolyte membrane materials which are responsible for the transport of protons are commonly known (polymeric proton exchange membranes such as a perfluorosulfonate polymer membrane, a commercially available Nafion® membrane, etc.).

The carbon material to be doped with nitrogen can be e.g. a carbon black, an activated carbon, a graphite, a graphene, or a mixture of at least two of the materials. These carbon materials are commonly known to the skilled person and are commercially available or can be obtained by known preparation methods.

Carbon black is a material produced by the incomplete combustion of heavy petroleum products. Subtypes are e.g. acetylene black, channel black, furnace black, lamp black and thermal black. A variety of carbon black materials which differ e.g. in BET surface area are commercially available. For further fine-tuning its properties, the carbon black can be subjected to a graphitizing treatment, e.g. by annealing the carbon black at high temperature (e.g. at least 2000°C or even at least 2500°C) in vacuum or an inert gas atmosphere.

Activated carbon is a porous carbon material, a char which has been subjected to reaction with gases, sometimes with the addition of chemicals, e.g. ZnCl₂, before, during or after carbonization in order to increase its adsorptive properties. By controlling the process of carbonization and activation, a variety of activated carbons having different porosity can be obtained. Activated carbons are mainly provided in granular and powdered forms, but can also be produced in textile form by controlled carbonization and activation of textile fibers. A variety of different activated carbon grades are commercially available.

In the present invention, the term "graphene" does not only encompass a mono-layer graphene, but also a few-layer graphene (e.g. containing up to 20 layers or even up to 50 layers).

Nitrogen-doping of the carbon material can be carried out by methods which are known to the skilled person. In-situ doping is carried out during the synthesis of the carbon material, whereas post doping includes a post-treatment of a pre-formed carbon material. Both approaches can be used in the present invention for preparing the nitrogen-doped carbon.

Post-doping can be achieved e.g. by treatment in a nitrogen-containing atmosphere (such as a nitrogen-containing plasma, e.g. N₂ plasma or a NH₃ plasma). Just as an example, the nitrogen-doped carbon can be prepared by treating a precursor carbon material (i.e. the carbon material to be doped) in a N₂ or NH₃ radio frequency plasma (RF plasma). By varying the excitation power, different doping levels of the carbon material can be achieved. Nitrogen-doping of carbon by a RF plasma treatment is described e.g. by H. Sachdev et al, Carbon, 84, 2015, pp. 426-433. Such a plasma treatment can be carried out e.g. in a fluidized bed reactor. However, other reactors can be used as well.

The nitrogen-doped carbon may also be obtained by pyrolysis of a nitrogen-containing polymer.

The preparation of nitrogen-doped graphene is described e.g. by X. Wang et al., ACS Catalysis, 2012, 2, pp. 781-794.

Preferably, the nitrogen-doped carbon has a nitrogen content of at least 0.5 wt%, determined by elemental analysis. More preferably, the nitrogen content of the nitrogen-doped carbon is at least 1.0 wt%, more preferably at least 1.5 wt% or at least 2.0 wt%.

The upper limit of the nitrogen content is not critical. Preferably, the upper limit should be chosen such that other properties which might be relevant (e.g. electrical conductivity) are not adversely affected. The nitrogen-doped carbon may have a nitrogen content, determined by elemental analysis, of e.g. 5.0 wt% or less, more preferably 4.5 wt% or less, even more preferably 4.0 wt% or less. In a preferred embodiment, the nitrogen-doped carbon has a nitrogen content of from 0.5 to 5.0 wt%, more preferably from 1.0 to 4.5 wt% or from 1.5 to 4.0 wt%.

The nitrogen-doped carbon can be doped with other (i.e. non-nitrogen) heteroatoms as well. If the carbon is doped by one or more further heteroatoms, it can be preferred that each of the additional heteroatoms is present in an amount of less than 2.0 wt%, more preferably less than 1.5 wt%, even more preferably less than 1.0 wt% or even less than 0.5 wt%. It can be preferred that the total amount of additional (i.e. non-nitrogen) heteroatoms in the nitrogen-doped carbon is less than 3.0 wt%, more preferably less than 2.5 wt%, even more preferably less than 1.5 wt%. It is also possible that the carbon is only doped by nitrogen, but not by other heteroatoms.

Preferably, the nitrogen-doped carbon has a BET surface area which is sufficiently high for effectively dispersing the OER catalyst on its surface. On the other hand, in the present invention it has been realized that oxidative stability of the nitrogen-doped carbon can be further optimized if its BET surface area is not too high.

In a preferred embodiment, the nitrogen-doped carbon black has a BET surface area of less than 180 m²/g, more preferably less than 150 m²/g or even less than 120 m²/g. For effectively dispersing the OER catalyst on its surface, the nitrogen-doped carbon black has a BET surface area of at least 15 m²/g, more preferably at least 25 m²/g or at least 50 m²/g. Accordingly, in a preferred embodiment, the nitrogen-doped carbon black has a BET surface area of from 15 to less than 180 m²/g, more preferably of from 25 to less than 150 m²/g, or from 50 to less than 120 m²/g.

In the present invention, it has also been realized that a further improvement of oxidative stability under acidic OER conditions can be achieved if the graphitic fraction of the nitrogen-doped carbon is relatively high, as indicated by the intensity ratio of the D peak to the G peak (I_{D}/I_{G}) in the Raman spectrum. As known to the skilled person, the I_{D}/I_{G} ratio is commonly used as an indicator for characterizing the atomic structure of carbon materials. A Raman spectrum of a perfect graphite structure would only show the G peak but no D peak, whereas a perfect diamond structure would only show the D peak but no G peak.

Preferably, the nitrogen-doped carbon has an intensity ratio of the D peak to the G peak in the Raman spectrum of less than 2.0, more preferably less than 1.7 or even less than 1.4.

Preferably, the nitrogen-doped carbon is electrically conductive. In a preferred embodiment, the nitrogen-doped carbon has a powder conductivity, measured at 500 bar, of at least 1 S/cm, more preferably at least 5 S/cm.

According to a further aspect, the present invention relates to the use of a nitrogen-doped carbon as a component in the anode-containing half-cell of a PEM water electrolyser.

With regard to the preferred properties of the nitrogen-doped carbon, reference can be made to the statements provided above.

As already stated above, the nitrogen-doped carbon is preferably present in the anode of the half-cell and an OER electrocatalyst is preferably supported on the nitrogen-doped carbon. In addition or alternatively to the anode, the nitrogen-doped carbon can be present in the current collector, the gas diffusion layer and/or the separator plate of the anode-containing half cell.

According to a further aspect, the present invention relates to a composition comprising
- a carbon which
   - is nitrogen-doped and
   - has a BET surface area of less than 180 m²/g,
- an oxygen evolution reaction (OER) catalyst which is supported on the carbon.

With regard to the preferred properties of the carbon, reference can be made to the statements provided above.

As already indicated above, appropriate oxygen evolution reaction catalysts are commonly known to the skilled person.

According to a further aspect, the present invention relates to the use of the nitrogen-doped carbon black as described above as a support for an oxygen evolution reaction catalyst, e.g. in a PEM water electrolyser.

The present invention will now be described in further detail in the following examples.

### Examples

### I. Measuring methods

Unless otherwise indicated, the parameters referred to in the present application are determined according to the following measuring methods.

### BET surface area

BET surface area was determined by gas adsorption analysis using Micromeritics ASAP 2420 Surface Area and Porosity Analyzer with N₂ adsorbate at 77.35 K. Prior to the measurement, samples were dried at 200 °C in vacuum overnight. The specific surface area was determined by BET theory using the multi-point method.

### I_{D}/I_{G} ratio by Raman spectroscopy.

Raman spectra were taken from three different spots or particles of each measured sample with a NT-MDT NTEGRA spectrometer using 488 nm excitation wavelength (2.54 eV), a 600/mm grating and a 20X objective. Peak fitting was carried out for the D- and G-modes with one Lorentzian each. Spectra were baseline subtracted and peak fitted using the OriginPro 8.5 software package.

### Elemental analysis.

The nitrogen content of a carbon material was analyzed using an Elementar vario Micro cube system.

### II. Preparation of nitrogen-doped carbon

A nitrogen-doped carbon was prepared by radio frequency nitrogen plasma treatment in a fluidized bed plasma reactor.

A Huettinger PFG 500 RF generator (13.56MHz, 5 kW) was used. The RF power was applied through the matching circuit by an outer coil. The reaction chamber was an inner quartz tube of 60 mm outer diameter (55 mm inner diameter) with a quartz frit below the induction coil which served as material support and gas distributor. An outer glass tube was arranged concentrically to the inner tube. The space between inner and outer tube was used for water cooling of the reactor. The base pressure of the system was about 2x10⁻³ mbar.

The carbon starting material (referred to as sample "CB0") to be subjected to the nitrogen doping was a carbon black which had the following properties:
- BET surface area of 74 m²/g
- I_{D}/I_{G} ratio of 1.2
No nitrogen was detected by elemental analysis.

The powdery carbon black starting material was dried at 120°C in vacuum for about 12 hours and homogenized by ball milling prior to its loading into the reactor. Subsequently, the reactor was loaded with the carbon black starting material (about 4 g) and evacuated. The generator was then switched on, the plasma was ignited, and the gas flow was set to the process flow rate. The operating pressure during plasma modifications was held in the range of about 0.1 - 1 mbar.

In general, the gas flow rate has to be suitable for fluidization of the material to be treated and may vary with changing gas or gas composition. For plasma treatment of a carbon black, typically gas flow rates in the range of 10 - 100 sccm can be used.

Nitrogen plasma treatment was carried out under the process conditions summarized in Table 1:

**Table 1: Process conditions for nitrogen plasma treatment**

| | Time (min) | Generator power (kW) | N₂ gas flow (ml/min) |
|---|---|---|---|
| N₂ Plasma Treatment | 30 | 1.5 | 20 |

Argon was also fed into the reactor at a gas flow rate of 30 ml/min.

About 3 g of a nitrogen-doped carbon black were recovered from the fluidized bed plasma reactor.

The nitrogen-doped carbon black obtained by the N₂ plasma treatment (referred to as sample "CB2") had the following properties:
- Nitrogen content, determined by elemental analysis, of 2.6 wt%
- BET surface area of 80 m²/g
- I_{D}/I_{G} ratio of 1.2

As shown by the data, nitrogen-doping is accomplished by the nitrogen plasma treatment, whereas other properties like BET surface area and I_{D}/I_{G} ratio do not change very much during the plasma treatment.

For comparative reasons, the carbon black starting material CB0 was also subjected to a hydrogen plasma treatment (treatment period: 30 minutes; generator power: 0.5 kW; H₂ flow: 60 ml/min; Ar gas flow: 20 ml/min). A H₂ plasma treated sample, referred to a sample "CB3", was obtained which had the following properties:
- No nitrogen detected by elemental analysis
- BET surface area of 80 m²/g
- I_{D}/I_{G} ratio of 1.2

### III. Oxidative stability tests of the nitrogen-doped carbon

The carbon starting material CB0, the H₂ plasma treated but non-nitrogen doped carbon black CB3, and the nitrogen-doped carbon black CB2 were subjected to oxidative stability tests under very acidic conditions and at high voltage, thereby reflecting OER conditions.

Two different tests were carried out.

In a first test, cyclic voltammetry curves were measured on CB0 (i.e. non-doped carbon black starting material) and CB2 (nitrogen-doped carbon black). The measurements were made at 10 mV/s in 0.5 M H₂SO₄ under Ar purging.

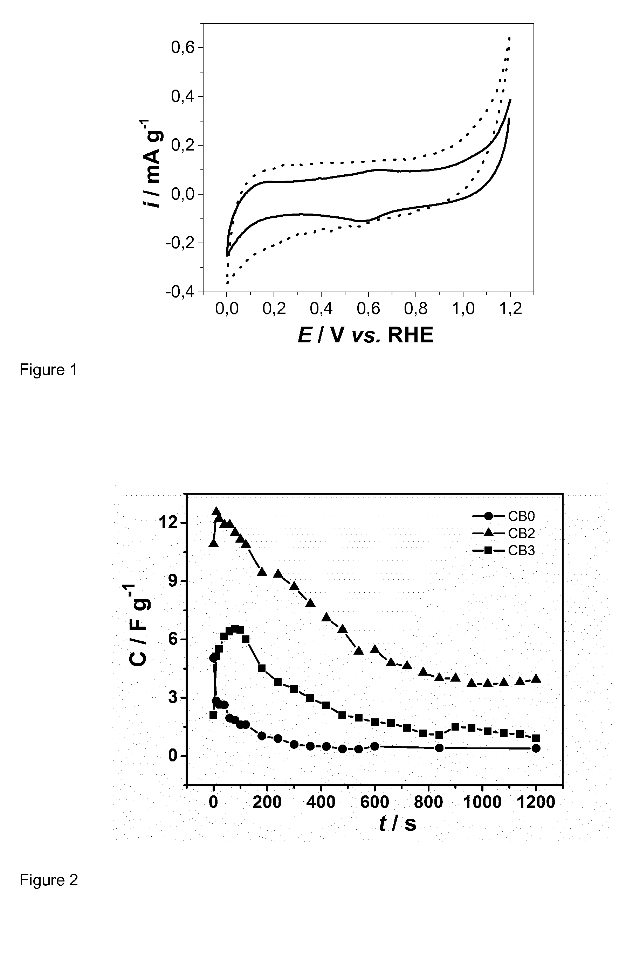

CB0- and CB2-coated Ti electrodes were prepared with loading amount of about 120 µg/cm². CV was carried out in the potential window of 0 - 1.2 V *vs.* RHE at scan rate 10 mV/s for 10 cycles. The CV curves of CB0 and CB2 are shown in Figure 1 (CB0: solid line; CB2: dotted line). In the CV curve of the non-doped CB0, there is a pair of redox peaks corresponding to the hydroquinone-quinone (HQ-Q) redox reaction at around 0.6 V. No redox peaks can be detected in the CV curve of the nitrogen-doped carbon black.

Thus, in a highly acidic environment which reflects OER reaction conditions of a PEM water electrolyser, the non-doped carbon black shows oxidative degradation (as indicated by the hydroquinone-quinone (HQ-Q) redox reaction at around 0.6 V), whereas no oxidative degradation can be detected for the nitrogen-doped carbon black, thereby demonstrating its improved oxidative stability.

In a second test, double layer capacitance as a function of time was determined, thereby obtaining averaged double-layer capacitance degradation plots. The test was made in 0.5 M H₂SO₄. During the test, the material is submitted to repeated high potential pulses (2 V vs. RHE, 10 s), and capacitance is measured after each pulse. Double layer capacitance can be influenced by the degree of surface oxidation. High double layer capacitance at the end of the test indicates high oxidative stability.

Figure 2 shows the averaged double-layer capacitance degradation plots of the carbon materials CB0 (circles), CB3 (squares) and CB2 (triangles). After an activation phase of around 10 s, the nitrogen-doped carbon black sample CB2 shows a double layer capacitance which is significantly higher than the one of the non-nitrogen-doped samples CB0 and CB3. Furthermore, at the end of the test, double layer capacitance of the nitrogen-doped sample CB2 is still significantly higher if compared to the non-nitrogen-doped carbon black samples CB0 and CB3.

The final capacitance values after testing for 1200 s in 0.5 M H₂SO₄ are summarized in Table 2:

**Table 2: Final capacitance values**

| **Sample** | **Capacitance after 1200s** |
|---|---|
| CB0 (non-doped and non-plasma treated carbon black) | 0.4 F/g |
| CB2 (nitrogen-doped by plasma treatment) | 3.9 F/g |
| CB3 (H₂ plasma treated, no nitrogen doping) | 0.5 F/g |

Thus, in conformity with the CV curves of the first test, the capacitance measurements also demonstrate that the nitrogen-doped carbon black samples show improved oxidative stability in a highly acidic environment (which reflects OER reaction conditions of a PEM water electrolyser) if compared to non-doped carbon black samples.

The Examples described above demonstrate that a carbon which is nitrogen-doped shows high oxidative stability in a very acidic environment which reflects OER conditions.

Oxidative stability can be further optimized if the carbon has a BET surface area of less than 180 m²/g and/or an I_{D}/I_{G} ratio of less than 2.0.

Due to the high oxidative stability in a very acidic environment and at high voltage, the nitrogen-doped carbon can be used as a component (e.g. of the anode for supporting the OER catalyst, the current collector, the gas diffusion layer, or the separator plate) in the anode-containing half cell of a PEM water electrolyser.

## Claims

1. A polymer electrolyte membrane water electrolyser, wherein a nitrogen-doped carbon is present in the anode-containing half-cell.

2. The water electrolyser according to claim 1, wherein the nitrogen-doped carbon is present in the anode.

3. The water electrolyser according to claim 1 or 2, wherein an oxygen evolution reaction catalyst is supported on the nitrogen-doped carbon.

4. The water electrolyser according to one of the preceding claims, wherein the anode-containing half cell comprises a current collector, and the current collector comprises the nitrogen-doped carbon; and/or wherein the anode-containing half cell comprises a separator plate, and the separator plate comprises the nitrogen-doped carbon; and/or wherein the anode-containing half cell comprises a gas diffusion layer, and the gas diffusion layer comprises the nitrogen-doped carbon.

5. The water electrolyser according to one of the preceding claims, wherein the nitrogen-doped carbon is a carbon black, an activated carbon, a graphite, a graphene, or a mixture of at least two of the materials.

6. The water electrolyser according to one of the preceding claims, wherein the nitrogen-doped carbon has a nitrogen content of at least 0.5 wt%.

7. The water electrolyser according to one of the preceding claims, wherein the nitrogen-doped carbon black has a BET surface area of less than 180 m²/g.

8. The water electrolyser according to one of the preceding claims, wherein the nitrogen-doped carbon has an intensity ratio of the D peak to the G peak in the Raman spectrum of less than 2.0.

9. A composite comprising
- a carbon which
- is nitrogen-doped, and
- has a BET surface area of less than 180 m²/g,
- an oxygen evolution reaction catalyst which is supported on the carbon.

10. The composite according to claim 9, wherein the carbon has an intensity ratio of the D peak to the G peak in the Raman spectrum of less than 2.0.

11. The composite according to claim 9 or 10, wherein the carbon is a carbon black, an activated carbon, a graphite, a graphene, or a mixture of at least two of the materials.

12. Use of the nitrogen-doped carbon according to one of the claims 9 to 11 as a catalyst support for an oxygen evolution reaction catalyst, preferably in a polymer electrolyte membrane water electrolyser.
